(19) **Europäisches Patentamt**
**European Patent Office**
**Office européen des brevets**

(11) **EP 2 381 394 B1**

(12) **EUROPEAN PATENT SPECIFICATION**

(45) Date of publication and mention
of the grant of the patent:
**02.07.2014 Bulletin 2014/27**

(51) Int Cl.:
**G06N 7/02** (2006.01)

(21) Application number: **10305411.0**

(22) Date of filing: **20.04.2010**

(54) **A method of reinforcement learning, corresponding computer program product, and data storage device therefor**

Verfahren zum bestärkenden Lernen, entsprechendes Computerprogrammprodukt und Datenspeichervorrichtung dafür

Procédé de renforcement de l'apprentissage, produit de programme informatique correspondant et dispositif de stockage de données correspondant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**26.10.2011 Bulletin 2011/43**

(73) Proprietor: **Alcatel Lucent
75007 Paris (FR)**

(72) Inventors:
- **Razavi, Rouzbeh**
  **15, Dublin (IE)**
- **Ho, Lester**
  **Blanchardstown, Dublin 15 (IE)**
- **Claussen, Holger**
  **Straffan, Co. Kildare (IE)**

(74) Representative: **ALU Antw Patent Attorneys
Copernicuslaan 50
2018 Antwerpen (BE)**

(56) References cited:
**WO-A1-2007/036003      US-A1- 2002 198 854**

- LIONEL JOUFFE: "Fuzzy Inference System Learning by Reinforcement Methods" IEEE TRANSACTIONS ON SYSTEMS, MAN, AND CYBERNETICS, PART C: APPLICATIONS AND REVIEWS, vol. 28, no. 3, August 1998 (1998-08), pages 338-355, XP002600749 ISSN: 1094-6977 DOI: 10.1109/5326.704563

- JERZY MARTYNA: "Fuzzy Reinforcement Learning for Routing in Wireless Sensor Networks" COMPUTATIONAL INTELLIGENCE, THEORY AND APPLICATIONS : INTERNATIONAL CONFERENCE 9TH FUZZY DAYS IN DORTMUND, GERMANY, SEPT. 18 - 20, 2006 ; PROCEEDINGS; [ADVANCES IN SOFT COMPUTING], BERLIN [U.A.] : SPRINGER, DE LNKD- DOI:10.1007/3-540-34783-6_61, no. PART 23, 1 January 2006 (2006-01-01), pages 637-645, XP008126555 ISBN: 978-3-540-34780-4 [retrieved on 2006-09-06]
- "Chapter 1: Basic Fuzzy Mathematics for Fuzzy Control and Modeling" In: Hao Ying: "Fuzzy Control and Modeling: Analytical Foundations and Applications" August 2000 (2000-08), Wiley-IEEE Press , XP002600750 ISBN: 978-0-7803-3497-7 , pages 1-14 * the whole document *
- LESLIE PACK KAELBLING ET AL: "Reinforcement Learning: A Survey" JOURNAL OF ARTIFICIAL INTELLIGENCE RESEARCH, MORGAN KAUFMAN PUBLISHERS, SAN FRANCISCO, CA, US, vol. 4, 1 May 1996 (1996-05-01), pages 237-285, XP007913974 ISSN: 1076-9757
- BERENJI H R ET AL: "A convergent actor-critic-based frl algorithm with application to power management of wireless transmitters" IEEE TRANSACTIONS ON FUZZY SYSTEMS, IEEE SERVICE CENTER, PISCATAWAY, NJ, US LNKD-DOI:10.1109/TFUZZ.2003.814834, vol. 11, no. 4, 1 August 2003 (2003-08-01) , pages 478-485, XP011099702 ISSN: 1063-6706

EP 2 381 394 B1

## Description

### Field of the Invention

The invention relates to a method of reinforcement learning comprising the steps of perceiving a current state from a set of states of an environment; based on the current state and a policy, choosing an action from a set of actions, wherein the policy associates each state from the set of states with an action from the set of actions; receiving from the environment a new state and a reward; and, based on the reward, optimizing the policy. The invention further relates to a computer program product comprising computer-executable instructions for performing said method when the program is run on a computer, and to a device programmed or configured to perform said method.

### Background

Inspired by related psychological theory, in computer science, reinforcement learning is a sub-area of machine learning concerned with how an agent ought to take actions in an environment so as to maximize some notion of long-term reward. In other words, reinforcement learning algorithms attempt to find a policy that maps states of the world to the applicable actions.

In this context, the environment is typically formulated by means of a finite-state Markov decision process (MDP), that is, a mathematical framework for modeling decision-making in situations where outcomes are partly random and partly under the control of a decision maker. State transition probabilities and reward probabilities in the MDP are typically stochastic but stationary over the course of the problem.

Reinforcement learning differs from so-called supervised learning in that correct input/output pairs are never presented, nor sub-optimal actions explicitly corrected, Further, there is a focus on on-line performance, which involves finding a balance between exploration of uncharted territory and exploitation of current knowledge.

Leslie P. Kaelbling, Michael L. Littman, and Andrew W. Moore disclose a variety of reinforcement learning approaches from a computer-science perspective in "Reinforcement Learning: A Survey", Journal of Artificial Intelligence Research, Volume 4, pages 237 thru 285. A major downside of the conventional agents described in this survey is their tendency to react abruptly to state transitions, causing significant changes in the environment. Such changes may in turn cause other agents to react abruptly, leading to an oscillation of the algorithm applied and, ultimately, an overall instability of the resulting reinforcement learning system. Moreover, these known approaches do not allow a human expert to embed a-priori knowledge of the respective problem domain in the system.

The document by LIONEL JOUFFE: "Fuzzy Inference System Learning by Reinforcement Methods", IEEE TRANSACTIONS ON SYSTEMS, MAN, AND CYBERNETICS, PART C: APPLICATIONS AND REVIEWS, vol. 28, no. 3, August 1998 (1998-08), pages 338-355, describes a computer-implemented method of learning comprising the steps of receiving a current state from a set of states of an environment, based on the current state and a policy, choosing an action from a set of actions, wherein the policy associates each state from the set of states with an action from the set of actions, in response to the action, receiving from the environment a new state from the set of states and a reward, and based on the reward and a measure of change of the environment, optimizing the policy, wherein the set of states and the set of actions are fuzzy sets. The document further discloses that each combination of a state from the set of states with an action from the set of actions is associated with a ranking, the action is chosen whose combination with the current state is associated with the highest ranking, and the policy is optimized by updating the ranking.

### Summary

It is an objective of the invention to present an improved approach that allows for smooth and continuous state transitions, thus increasing the overall stability of the resulting reinforcement learning system. It is a further objective to present a model that allows for the utilization of a-priori knowledge to speed up the learning process.

This objective is achieved by a method of reinforcement learning comprising the steps of perceiving a current state from a set of states of an environment; based on the current state and a policy, choosing an action from a set of actions, wherein the policy associates each state from the set of states with an action from the set of actions; receiving from the environment a new state and a reward; and, based on the reward, optimizing the policy, wherein the set of states and the set of actions are fuzzy sets. This object further is achieved by a computer program product comprising computer-executable instructions for performing said method when the program is run on a computer, or by a device programmed or configured to perform said method.

A main idea of the invention is the use of fuzzy sets to represent the states and actions of a reinforcement learning model. In set theory, by fuzzy set, as introduced by Lotfi A. Zadeh in "Fuzzy Sets", Information and Control, Volume 8 1965, pages 338 to 353, is meant a set whose elements have degrees of membership. Fuzzy set theory permits the gradual assessment of the membership of elements in a set; this is described with the aid of a membership function valued in the real unit interval [0, 1].

In particular, the use of fuzzy sets to represent the possible states and actions of the reinforcement learning model allows for the employment of a policy based on fuzzy logic. In artificial intelligence (AI), by fuzzy logic is meant a form of multi-valued logic derived from fuzzy set theory to deal with reasoning that is approximate rather than precise. Specifically, according to the principles of fuzzy logic, the degree of truth of a statement can range between 0 and 1 and is not constrained to the two truth values of classic propositional logic.

As a further benefit, the proposed approach allows for the application of reinforcement learning to a wide range of domains in which information is incomplete or imprecise. One such domain is the deployment and operation of dynamic service environments, such as is called for in the provisioning of wireless networks.

Further developments of the invention can be gathered from the dependent claims and the following description.

In the following the invention will be explained further making reference to the attached drawing.

To implement reinforcement learning according to an embodiment of the invention, a current state from a fuzzy set of states of an environment is perceived. Based on this current state and a policy, an action, is chosen from a fuzzy set of actions, the policy associating each state with an action. In response to the action, a new state and a reward are received from the environment. Finally, based on the reward, the policy is optimized.

### Brief Description of the Figure

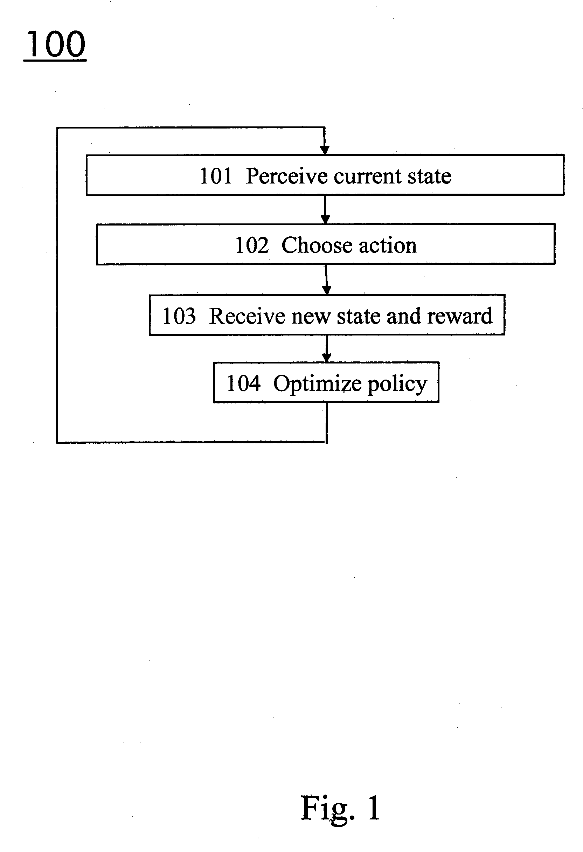

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, a third processing step 103, a fourth processing step 104, each represented by a rectangle. A flow of control passing through the processing steps 101 to 104 and leading back from the fourth processing step 104 to the first processing step 101 is represented by a set of arrows. An arrow starting at a first symbol and ending at a second symbol indicates that control passes from the first symbol to the second symbol.

In the embodiment at hand, the method is applied by an agent implemented as a computer program.

In the first processing step 101, the agent perceives a current state from a set of states of an environment;. This set of states takes the form of a fuzzy set. To reflect multiple input parameters, each state is defined as a tuple of input variables, the set of states thus being the Cartesian product of the universes of discourse of all these variables. To further allow for the use of "crisp" - as opposed to fuzzy - input values, the perception of the current states requires the agent to fuzzify the input variables obtained from the environment by mapping them to membership function.

In the second processing step 102, the agent chooses an action from a set of actions, the choice being based on the current state received in the first processing step 101 and a policy. This policy associates each state from the set of states with an action from the set of actions. Like the set of states, the set of actions takes the form of a fuzzy set. Accordingly, the policy is based on a fuzzy rule, that is, a conditional statement in the form "IF x is A THEN y is B", wherein x and y are linguistic variables and A and B are linguistic values determined by fuzzy sets on their respective universe of discourse. In fuzzy logic, the if-part "x is A" of the rule is called the antecedent or premise, while the then-part "$Y$ is $B$" of the rule is called the consequent or conclusion. Therefore, each possible state is defined by a unique antecedent of the fuzzy rule underlying the policy. Based on such policy, the agent employs rule-based inference to select the applicable action, that is, it applies the rule to the fuzzified input variables in order to draw a conclusion as to the appropriate response.

More specifically, due to its expressive power as well as easy formalization and interpretability, the agent makes use of Mamdani-type inference. To this end, in a first processing substep (not depicted), the agent evaluates the antecedent of each fuzzy rule based on the input variables fuzzified in the first processing step 101. In order to reflect the plurality of membership functions derived during fuzzification, the agent applies a triangular norm (t-norm) to pairs of function values. In mathematics, a t-norm is a kind of binary operation $T: [0, 1] \times [0, 1] \rightarrow [0, 1]$ used in the framework of probabilistic metric spaces and in multi-valued logic, including fuzzy logic, that satisfies the properties of commutativity ($T(a, b) = T(b, a)$), monotonicity ($T(a, b) \leq T(c, d)$ if $a \leq c$ and $b \leq d$), associativity ($T(a, T(b, c)) = T(T(a, b), c)$), and wherein the number 1 acts as an identity element ($T(a, 1) = a$). Prominent examples of t-norms applicable by the agent include the minimum t-norm, product t-norm, Lukasiewicz t-norm, drastic t-norm, Hamacher t-norm, and Schweizer-Sklar t-norm.

This way, the agent, for each fuzzy rule of the policy, calculates what is known in the art of fuzzy logic as a firing strength or degree of fulfillment, that is, the degree to which the antecedent of the fuzzy rule is satisfied. To shape the output function or conclusion of this fuzzy rule given its firing strength and consequent, the agent, in a second processing substep (not depicted) of the Mamdani-type inference, applies a fuzzy implication operator. This implication is effected by means of a residuum, that is, a unique binary operations on [0, 1] such that T(z, x) $\leq$ y) if and only if $z \leq$ (x => y) for all x, y, z in [0, 1].

In a third processing substep (not depicted) of the Mamdani-type inference, the agent aggregates the conclusions obtained in the second processing substep for all fuzzy rules of the policy. To this end, the conclusion of the second processing substep being a fuzzy set, the agent makes use of a fuzzy aggregation operation, that is, an operation by which the fuzzy sets obtained by each rule are combined in a suitable way to produce a single fuzzy set. If the number of fuzzy rules of the policy equals n (2 $\leq$n), this operation is defined by a function $h$: [0, 1]$^n \to$ [0, 1], such as the maximum function.

In a fourth and last processing substep of the Mamdani-type inference, the agent transforms the fuzzy set obtained in the third processing substep to obtain a single action from the set of actions. This task involves what is known in the art as defuzzification, that is, the process of producing, given the fuzzy set, a quantifiable result leading to a specific decision. To improve the efficiency of defuzzification, the fuzzy set takes the form of a fuzzy singleton, having a membership function that is unity at one particular point and zero everywhere else.

In the embodiment at hand, each action a from the set of actions A available to each state s from the set of states S is associated with a ranking R(s, a), and the agent selects the highest ranking action for the given state:

$$A_{selected\,s} = a \leftrightarrow \underset{a'}{Max}\big(R(s,a')\big) = R(s,a)$$

In the third processing step 103, in response to the action chosen in the second processing step 102, the agent receives from the environment a new state. The agent further receives a reward. In reinforcement learning, by reward is meant a real number, maximization of which is considered to be the agent's long-term goal.

Finally, in the fourth processing step 104, the agent, based on the reward received in the third processing step 103, optimizes the policy. Accordingly, the agent updates the ranking associated with each action. To reflect the different influence of each fuzzy rule on the overall reward, the agent takes into account the firing strength calculated in the second processing step 102 when adapting the ranking. The normalized firing strength, hereinafter called the state strength, is derived as

$$\forall s \in S \qquad Ss(s) \equiv \frac{f_s}{\sum_{s'} f_{s'}},$$

$f_s$ representing the firing strength of the state s.

Additionally, one can define a similar measure for the action space to determine the contribution of individual taken actions on the final collective action after the defuzzification stage. Generally speaking, since defuzzification is not a linear procedure, it is not an easy task to isolate and evaluate the impact of individual contributing actions on the overall collective result. However, the degree of truth of the state associated to each action can be considered as a fairly relevant measure. Additionally, it is quite possible that many states recommend identical actions. For example considering a fuzzy system with a number of simultaneously activated states, if all states recommend a very same action, regardless of the degree of truth of each state, the final collective output can be said to be fully in line with the individual actions. In practice, it is very common for at least a plurality of activated states to select the same action. Especially when the number of inputs to the fuzzy system is not excessive, the states are relatively similar, implying a high probability of identical actions to be resulting. The involvement of each individual action in deciding the final collective output is proportional to the sum of the firing strengths of all states nominating that particular action. Therefore, the action strength can be defined as

$$\forall a \in A \qquad As(a) \equiv \frac{\sum_s f_s \cdot Selected(s,a)}{\sum_{s'} f_{s'}},$$

where *Selected*(*s*,*a*) is a binary parameter indicating whether or not action a is the selected action in state s:

$$Selected\,(s,a) = \begin{cases} 1 & \textit{if a is selected for state s} \\ 0 & \textit{Otherwise} \end{cases}$$

In case all states advise completely different actions, thus no two states suggesting the same action, the action strength parameter for all nominated actions is considered equal to the corresponding state strengths of their nominating states. In general,

$$\forall s \in S \quad \forall a \in A \quad A_{selected,s} = a \;\Rightarrow\; As(a) \geq Ss(s)$$

.

Note that when proposing the reinforcement distribution algorithm and the subsequent rank updating procedure, we first consider myopic systems where only immediate rewards are concerned ($\gamma$=0). This is to facilitate the understanding of the proposed algorithms while the generalized algorithms are presented subsequently afterwards. In such a system, one simple way to update the ranking of the selected actions of the fired rules would be simply to use weighted averaging:

$$R(s,a) \leftarrow \frac{Sum(s,a).R(s,a) + w(s,a).F(r(s,a))}{Sum(s,a) + w(s,a)} \quad,$$

where $w(s,a)$ refers to the updating weight associated to the action a in state s and $Sum(s,a)$ represents the subtotal weight corresponding to action a in state s. After updating the rule's ranking, $Sum$(s,a) would be updated as follows:

$$Sum(s,a) \leftarrow Sum(s,a) + w(s,a).$$

Moreover, $r(s,a)$ is the immediate observed reinforcement after taking action a in state s and F is an arbitrary function that maps the reinforcements signal into to the actions' ranking space. This function could serve for various purposes such as to limit the range of the action's rankings or to establish a nonlinear mapping between the observed reinforcements and their impact on the associated actions' ranking. In its simplest form

$$F(r(s,a)) = r(s,a).$$

The averaging weights are defined as a fuzzy conjunction of the state strength and action strength, that is,

$$\forall s \in S, \forall a \in A \quad w(s,a) = \big(Ss(s) \wedge As(a)\big) \wedge Selected(s,a),$$

where $\wedge$ represents the conjunction operator. The rule of the selected parameter is to limit the update procedure only to the selected actions in fired states.

To reflect dynamic changes in the environment and provide for continuous adaptation of the model, the agent, having optimized the policy, returns to the first processing step 101 and reiterates until a predetermined stop condition is met.

A person of skill in the art would readily recognize that steps of various above-described methods can be performed by programmed computers . Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e:g., digital memories, magnetic storage media such as a magnetic disks or tapes, hard drives, or optically readable digtal data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

**Claims**

1. A computer-implemented method of learning for the provisioning of wireless networks comprising the steps of
receiving (101) a current state from a set of states of a dynamic service environment,
based on the current state and a policy, choosing (102) an action from a set of actions, wherein the policy associates each state from the set of states with an action from the set of actions,
in response to the action, receiving (103) from the dynamic service environment a new state from the set of states and a reward, and,
based on the reward, optimizing (104) the policy, wherein the set of states and the set of actions are fuzzy sets, wherein each combination of a state from the set of states with an action from the set of actions is associated with a ranking, the action is chosen (102) whose combination with the current state is associated with the highest ranking, and the policy is optimized (104) by updating the ranking.

2. A method according to claim 1, **characterized in that** each state in the set of states is based on a plurality of input variables and the method comprises the preliminary step of
fuzzifying the input variables.

3. A method according to claim 1 or 2, **characterized in that** the policy is based on a fuzzy rule comprising an antecedent and a consequent, wherein the antecedent is based on the set of states and the step of choosing (102) the action is effected by means of rule-based inference.

4. A method according to claim 3, **characterized in that** the step of choosing (102) the action is effected by means of Mamdani-type fuzzy inference.

5. A method according to claim 3 or 4, **characterized in that** the policy is based on a plurality of fuzzy rules and, in order to choose (102) the action, the method comprises the step of
calculating a firing strength for each fuzzy rule based on its antecedent.

6. A method according to claim 5, **characterized in that** the consequent comprises a further fuzzy set and, in order to choose (102) the action, the method comprises the further step of
determining an aggregate based on the firing strength and consequents of at least two of the fuzzy rules.

7. A method according to claim 2 and one of claims 5 and 6, **characterized in that** the firing strength is calculated based on a triangular norm of at least two of the input variables.

8. A method according to claim 6, **characterized in that** the triangular norm is either of the following:

   a minimum triangular norm,
   a product triangular norm,

   a Łukasiewicz triangular norm,
   a drastic triangular norm,
   a Hamacher triangular norm, and
   a Schweizer-Sklar triangular norm.

9. A computer program product comprising computer-executable instructions for performing a method according to one of claims 1 to 8.

10. A device programmed or configured to perform a method according to one of claims 1 to 8.

**Patentansprüche**

1. Computerimplementiertes Verfahren zum Lernen zur Bereitstellung an drahtlose Netzwerke, die folgenden Schritte umfassend:

   Empfangen (101) eines aktuellen Zustands aus einem Satz von Zuständen einer dynamischen Dienstumgebung, basierend auf dem aktuellen Zustand und einer Richtlinie, Auswählen (102) einer Aktion aus einem Satz von Aktionen, wobei die Richtlinie jeden Zustand aus dem Satz von Zuständen mit einer Aktion aus dem Satz von Aktionen assoziiert,
   in Reaktion auf die Aktion, Empfangen (103), von der dynamischen Dienstumgebung, eines neuen Zustands aus dem Satz von Zuständen und einer Gegenleistung, und
   basierend auf der Gegenleistung, Optimieren (104) der Richtlinie, wobei der Satz von Zuständen und der Satz von Aktionen Fuzzy-Sätze sind,
   wobei jede Kombination eines Zustands aus dem Satz von Zuständen mit einer Aktion aus dem Satz von Aktionen mit einer Rangordnung assoziiert ist, wobei die Aktion, deren Kombination mit dem aktuellen Zustand mit der höchsten Rangordnung assoziiert ist, ausgewählt wird (102), und wobei die Richtlinie durch Aktualisieren der Rangordung optimiert (104) wird.

2. Verfahren nach Anspruch 1, **dadurch gekennzeichnet, dass** jeder Zustand in dem Satz von Zuständen auf einer Vielzahl von Eingangsvariablen basiert ist und das Verfahren den folgenden vorausgehenden Schritt umfasst:

   Fuzzifizieren der Eingangsvariablen.

3. Verfahren nach Anspruch 1 oder 2, **dadurch gekennzeichnet, dass** die Richtlinie auf einer Fuzzy-Regel, welche ein Antezedens und ein Sukzedens umfasst, basiert, wobei das Antezedens auf dem Satz von Zuständen basiert und der Schritt des Auswählens (102) der Aktion mittels einer regelbasierten Inferenz durchgeführt wird.

4. Verfahren nach Anspruch 3, **dadurch gekennzeichnet, dass** der Schritt des Auswählens (102) der Aktion mittels einer Fuzzy-Inferenz vom Typ Mamdani durchgeführt wird.

5. Verfahren nach Anspruch 3 oder 4, **dadurch gekennzeichnet, dass** die Richtlinie auf einer Vielzahl von Fuzzy-Regeln basiert und das Verfahren für die Auswahl (102) der Aktion den folgenden Schritt umfasst:

   Berechnen einer Feuerungsstärke für jede Fuzzy-Regel auf der Basis ihres Antezedens.

6. Verfahren nach Anspruch 5, **dadurch gekennzeichnet, dass** das Sukzedens einen weiteren Fuzzy-Satz umfasst und das Verfahren für die Auswahl (102) der Aktion den folgenden weiteren Schritt umfasst:

   Ermitteln eines Aggregats auf der Basis der Feuerungsstärke und Sukzedensien mindestens zweier der Fuzzy-Regeln.

7. Verfahren nach Anspruch 2 und entweder Anspruch 5 oder Anspruch 6, **dadurch gekennzeichnet, dass** die Feuerungsstärke auf der Basis einer T-Norm mindestens zweier der Eingangsvariablen berechnet wird.

8. Verfahren nach Anspruch 6, **dadurch gekennzeichnet, dass** die T-Norm eine beliebige der folgenden Normen ist:

   Eine Minimum-T-Norm,
   eine Produkt-T-Norm,
   eine T-Norm nach Lukasiewicz,
   eine drastische T-Norm,
   eine T-Norm nach Hamacher, und
   eine T-Norm nach Schweizer und Sklar.

9. Computerprogramm-Produkt, umfassend computerausführbare Befehle zum Durchführen eines Verfahrens gemäß einem der Ansprüche 1 bis 8.

10. Vorrichtung, programmiert oder konfiguriert für das Durchführen eines Verfahrens gemäß einem der Ansprüche 1 bis 8.

**Revendications**

1. Procédé mis en oeuvre sur ordinateur d'apprentissage de la fourniture de réseaux sans fil comprenant les étapes suivantes

   réception (101) d'un état actuel parmi un ensemble d'états d'un environnement de service dynamique,
   en se basant sur l'état actuel et une stratégie, sélection (102) d'une action parmi un ensemble d'actions, la stratégie associant chaque état de l'ensemble d'états avec une action de l'ensemble d'actions,
   en réponse à l'action, réception (103) de la part de l'environnement de service dynamique un nouvel état de l'ensemble d'états et une récompense, et
   en se basant sur la récompense, optimisation (104) de la stratégie, l'ensemble d'états et l'ensemble d'actions étant des ensembles flous,
   chaque combinaison d'un état de l'ensemble d'états avec une action de l'ensemble d'actions étant associée avec un classement, l'action sélectionnée (102) étant celle dont la combinaison avec l'état actuel est associée avec le classement le plus élevé et la stratégie étant optimisée (104) en mettant à jour le classement.

2. Procédé selon la revendication 1, **caractérisé en ce que** chaque état de l'ensemble d'états est basé sur une pluralité de variables d'entrée et le procédé comprend l'état préliminaire de
   rendre les variables d'entrée floues.

3. Procédé selon la revendication 1 ou 2, **caractérisé en ce que** la stratégie est basée sur une règle floue comprenant une prémisse et une conclusion, la prémisse étant basée sur l'ensemble d'états et l'étape de sélection (102) de l'action étant exécutée au moyen d'une inférence basée sur la règle.

4. Procédé selon la revendication 3, **caractérisé en ce que** l'étape de sélection (102) de l'action est exécutée au moyen d'une inférence floue de type Mamdani.

5. Procédé selon la revendication 3 ou 4, **caractérisé en ce que** la stratégie est basée sur une pluralité de règles floues et, en vue de sélectionner (102) l'action, le procédé comprend l'étape de
   calcul d'une intensité d'amorçage pour chaque règle floue en se basant sur sa prémisse.

6. Procédé selon la revendication 5, **caractérisé en ce que** la conclusion comprend un ensemble flou supplémentaire et, en vue de sélectionner (102) l'action, le procédé comprend l'étape supplémentaire de
   détermination d'un agrégat basé sur l'intensité d'amorçage et les conclusions d'au moins deux des règles floues.

7. Procédé selon la revendication 2 et l'une des revendications 5 et 6, **caractérisé en ce que** l'intensité d'amorçage est calculée en se basant sur une norme triangulaire d'au moins deux des variables d'entrée.

8. Procédé selon la revendication 6, **caractérisé en ce que** la norme triangulaire est l'une ou l'autre des suivantes :

   une norme triangulaire minimale,
   une norme triangulaire de produit,
   une norme triangulaire de Lukasiewicz,
   une norme triangulaire drastique,
   une norme triangulaire de Hamacher, et
   une norme triangulaire de Schweizer-Sklar.

9. Produit de programme informatique comprenant des instructions exécutables par ordinateur pour mettre en oeuvre un procédé selon l'une des revendications 1 à 8.

10. Dispositif programmé ou configuré pour mettre en oeuvre un procédé selon l'une des revendications 1 à 8.

<u>100</u>

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Reinforcement Learning: A Survey. *Journal of Artificial Intelligence Research,* vol. 4, 237
- **LIONEL JOUFFE.** Fuzzy Inference System Learning by Reinforcement Methods. *IEEE TRANSACTIONS ON SYSTEMS, MAN, AND CYBERNETICS, PART C: APPLICATIONS AND REVIEWS,* August 1998, vol. 28 (3), 338-355
- **LOTFI A. ZADEH.** Fuzzy Sets. *Information and Control,* 1965, vol. 8, 338-353